# EUROPÄISCHE PATENTSCHRIFT

(11) **EP 0 981 791 B1**
(45) Veröffentlichungstag und Bekanntmachung des Hinweises auf die Patenterteilung: **11.04.2001**
(21) Anmeldenummer: 98925570.8
(22) Anmeldetag: 11.05.1998
(51) Int. Cl.: G06F 3/033

(54) **BILDAUFNAHMEEINRICHTUNG**
CAMERA SYSTEM
SYSTEME DE PRISE DE VUES

(30) Priorität: 17.05.1997 DE 19720785
(43) Veröffentlichungstag der Anmeldung: 01.03.2000
(73) Patentinhaber: Deutsche Telekom AG, 53113 Bonn (DE)
(72) Erfinder: KOOPS, Hans, Wilfried, Peter, D-64372 Ober-Ramstadt (DE); HOINKIS, Ottmar, D-64297 Darmstadt (DE)
(86) Internationale Anmeldenummer: EP9802743
(87) Internationale Veröffentlichungsnummer: WO9853390

(56) Entgegenhaltungen:
- EP-A- 0 349 322
- WO-A-89/09959
- WO-A-97/21301
- DE-A- 4 029 246
- US-A- 4 945 348
- US-A- 5 771 039

## Beschreibung

Die Erfindung betrifft eine Bildaufnahmeeinrichtung.

In DE 195 45 484 A1 ist eine Bildaufnahmeeinrichtung nach der Gattung des Hauptanspruchs beschrieben. Dabei ist unter anderem vorgesehen, diese Bildaufnahmeeinrichtung in einer Baueinheit zu kombinieren. In vielen Anwendungsfällen für eine Bildaufnahmeeinrichtung nach der Gattung des Hauptanspruchs ist jedoch bereits ein Bildschirm entweder in Form einer Kathodenstrahlröhre oder eines LCD-Displays vorhanden.

Aufgabe der vorliegenden Erfindung ist es daher, die bekannte Bildaufnahmeeinrichtung derart zu gestalten, daß eine Verwendung vor einem Bildschirm in vorteilhafter Weise möglich ist.

Diese Aufgabe wird erfindungsgemäß gelöst durch eine Bildaufnahmeeinrichtung mit mindestens einem Photodetektor je aufzunehmendem Bildelement, vor dem jeweils ein fokussierendes Element zur Abbildung jeweils eines Elementes des aufzunehmenden Bildes auf den Photodetektor angeordnet ist, wobei die Bildaufnahmeeinrichtung als dünne Platte ausgebildet ist und wobei auf der von dem aufzunehmenden Bild abgewandten Seite weitere fokussierende Elemente derart angeordnet sind, daß Licht, welches von einem Bildschirm emittiert wird, auf dem die Bildaufnahmeeinrichtung aufgebracht ist, in einer Ebene fokussiert wird, die innerhalb der Bildaufnahmeeinrichtung oder unmittelbar vor der Bildaufnahmeeinrichtung liegt. Dabei ist die Platte vorzugsweise biegsam.

Die erfindungsgemäße Bildaufnahmeeinrichtung hat den Vorteil, daß die für die Bildaufnahme erforderlichen fokussierenden Elemente (Sammellinsen) eine Betrachtung des auf dem Bildschirm erzeugten Bildes nicht stören.

Eine vorteilhafte Ausgestaltung der erfindungsgemäßen Bildaufnahmeeinrichtung besteht darin, daß das vom Bildschirm emittierte Licht in der Ebene der fokussierenden Elemente fokussiert wird. Bei dieser Ausgestaltung wird das vom Bildschirm emittierte Licht in keiner Weise von den zur Bildaufnahme erforderlichen Linsen beeinflußt. Da sich jedoch der Bildschirm hinter einer Glasscheibe befindet, die unter Umständen eine gegenüber der Bildaufnahmeeinrichtung erhebliche Dicke aufweisen kann, kann es vorteilhaft sein, wenn die weiteren fokussierenden Elemente jeweils eine größere Fläche als die fokussierenden Elemente aufweisen, also das von den weiteren fokussierenden Elementen gebildete Raster wesentlich gröber ist. Damit wird von jeweils einem weiteren fokussierenden Element ein größerer Abstrahlwinkel erfaßt als bei einer den fokussierenden Elementen entsprechenden Fläche.

Je nach Gegebenheiten im einzelnen kann dabei vorgesehen sein, daß die weiteren fokussierenden Elemente von jeweils einer Sammellinse gebildet werden oder daß die weiteren fokussierenden Elemente jeweils von zwei voneinander im Abstand angeordneten Sammellinsen gebildet werden. Diese Ausführungsform ist insbesondere bei Bildschirmen mit einer dicken Glasscheibe geeignet.

An derartige Verhältnisse ist auch eine andere Ausführungsform angepaßt, die darin besteht, daß jeweils ein weiteres fokussierendes Element gleichachsig je einem Photodetektor und einem fokussierenden Element zugeordnet sind, wobei vorzugsweise vorgesehen ist, daß die Fokussierung des vom Bildschirm emittierten Lichtes in einer Ebene erfolgt, die zwischen dem Photodetektor und der Ebene der fokussierenden Elemente liegt.

Eine Belichtung der Photodetektoren mit dem vom Bildschirm emittierten Licht wird bei einer Weiterbildung der erfindungsgemäßen Bildaufnahmeeinrichtung dadurch verhindert, daß an der vom aufzunehmenden Bild abgewandten Seite der Photodetektoren eine lichtundurchlässige Schicht derart angeordnet ist, daß das vom Bildschirm emittierte Licht die Photodetektoren nicht beeinträchtigt.

Eine andere Weiterbildung dient zur Aufnahme von Farbbildern und ist dadurch gekennzeichnet, daß vor den Photodetektoren Farbfilter angeordnet sind, welche eine Separation verschiedenfarbigen Lichts ermöglichen.

Eine andere Weiterbildung der erfindungsgemäßen Bildaufnahmeeinrichtung besteht darin, daß Licht, welches vom Bildschirm emittiert wird, an einem sich der Bildaufnahmeeinrichtung nähernden Gegenstand zu mindestens einem der Photodetektoren reflektiert wird und daß Informationen gewonnen werden, welche der Photodetektoren reflektiertes Licht empfangen. Damit kann eine erfindungsgemäße Bildaufnahmeeinrichtung zusammen mit einem Bildschirm als Eingabegerät, beispielsweise für einen Computer, verwendet werden, bei dem man lediglich mit dem Finger oder einem geeigneten Gegenstand auf vorgegebene Felder zeigt, um eine Eingabe durchzuführen, siehe Patentanmeldung DE 196 21 362 A1 der Anmelderin.

Ausführungsbeispiele der Erfindung sind in der Zeichnung anhand mehrerer Figuren dargestellt und in der nachfolgenden Beschreibung näher erläutert. Es zeigt:
- Fig. 1: einen ausschnittsweisen Schnitt durch ein erstes Ausführungsbeispiel und eine Ansicht des ersten Ausführungsbeispiels,
- Fig. 2: einen Schnitt durch den vorderen Teil einer Bildröhre mit der vergrößerten Darstellung eines Farb-Tripels,
- Fig. 3: eine Darstellung der optischen Verhältnisse bei dem auf dem Bildschirm angebrachten Ausführungsbeispiel nach Fig. 1,
- Fig. 4: schematisch ein zweites Ausführungsbeispiel und
- Fig. 5: ein drittes Ausführungsbeispiel.

Gleiche Teile sind in den Figuren mit gleichen Bezugszeichen versehen.

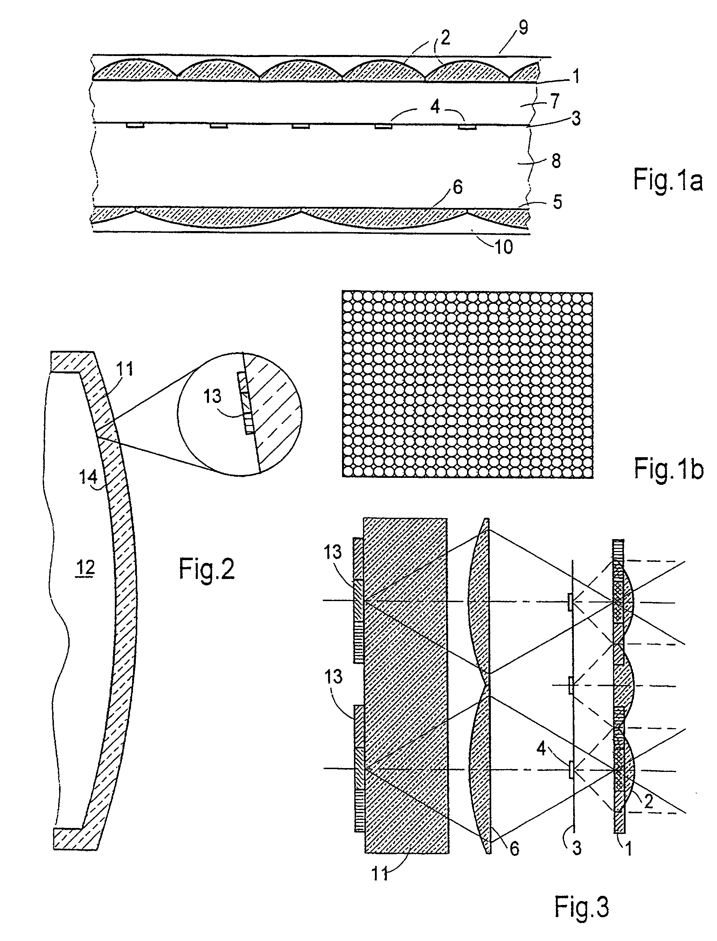

Bei dem ausschnittsweise in Fig. 1a und als Draufsicht in kleinerem Maßstab in Fig. 1b dargestellten Ausführungsbeispiel, das an sich die Form einer rechteckigen Platte der Größe eines Bildschirms aufweist, sind an der zum aufnehmenden Gegenstand gerichteten Ebene 1 Sammellinsen 2 rasterförmig angeordnet. In der Brennebene 3 der Sammellinsen 2 befinden sich Photodetektoren 4, deren Fläche wesentlich kleiner als die Fläche der jeweiligen Linse 2 ist, so daß lediglich die Strahlen, die parallel in die Linsen 2 eintreten, in elektrische Signale umgewandelt werden. Wie für Bildaufnahmeeinrichtungen an sich bekannt, können die Ausgangssignale der Photodetektoren 4 verstärkt und weiterverarbeitet werden. Dazu sind die Photodetektoren unter anderem mit in Fig. 1 nicht dargestellten Leiterbahnen verbunden.

In einer weiteren Ebene 5 sind weitere Sammellinsen 6 angeordnet, welche, wie später anhand der Figuren 2 und 3 erläutert wird, das Licht des Bildschirms in Ebene 1 fokussieren und im folgenden auch Wiedergabelinsen genannt werden. Für dieses Licht sind die Sammellinsen 2 - die im folgenden auch Aufnahmelinsen genannt werden - praktisch wirkungslos.

Eine Realisierung der erfindungsgemäßen Bildaufnahmeeinrichtung ist als massive Platte bzw. Folie dadurch möglich, daß mehrere Schichten aufeinanderliegen, wobei die Schichten, die zur Gewährleistung des Abstandes zwischen den die Linsen bildenden Schichten dienen, eine niedrigere Dielektrizitätskonstante aufweisen sollten, als die Linsen selbst. Zusätzlich zu diesen Zwischenschichten 7 und 8 können die Außenseiten der Bildaufnahmeeinrichtung mit jeweils einer weiteren Schicht 9, 10 versehen sein, um eine glatte Oberfläche zu erhalten, die leichter saubergehalten werden kann. Der Übersichtlichkeit halber sind in Fig. 1b relativ wenige Wiedergabelinsen dargestellt. Die Anzahl der Aufnahmelinsen und der Photodetektoren kann an die üblichen Auflösungen bei der Bildaufnahme angepaßt werden.

Fig. 2 stellt die Frontscheibe 11 einer Bildröhre 12 dar, auf deren Innenseite Leuchtstoffe in Form von Farb-Tripel 13 mit den Grundfarben Rot, Grün und Blau aufgebracht sind, die den Bildschirm 14 bilden. Aus Festigkeitsgründen weist die Frontscheibe 11 der Bildröhre 12 eine erhebliche Stärke auf, was bei der Auslegung der erfindungsgemäßen Bildaufnahmeeinrichtung im einzelnen zu berücksichtigen ist.

Fig. 3 zeigt schematisch die Strahlengänge bei dem Ausführungsbeispiel nach Fig. 1 im Zusammenwirken mit dem Bildschirm 14. Um eine ungestörte Betrachtung des Bildschirms aus einem relativ großen Blickwinkel zu ermöglichen und das vom Bildschirm 14 emittierte Licht weitgehend auszunutzen, sind die Wiedergabelinsen 6 größer ausgeführt als die Aufnahmelinsen 2. Jeweils ein Farb-Tripel 13 wird in die Ebene 1 der Aufnahmelinsen 2 abgebildet, so daß im Gegensatz zu beispielsweise einem Farb-Tripel in der Ebene 3 der Photodetektoren 4 keine Abbildung außerhalb in Richtung auf den Betrachter mehr erfolgt.

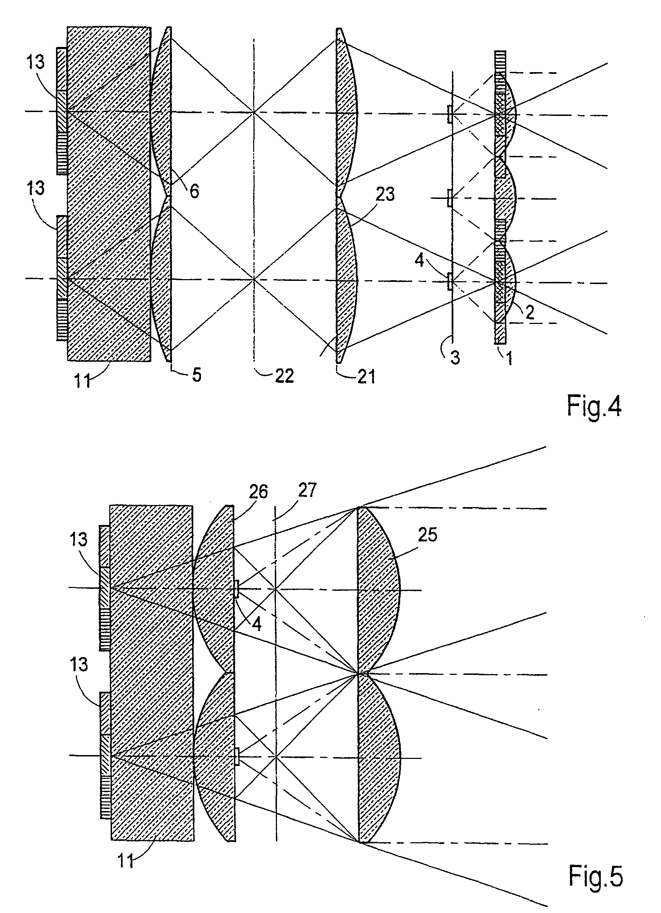

Bei dem Ausführungsbeispiel nach Fig. 4 sind Wiedergabelinsen in zwei Ebenen 5, 21 vorgesehen. Dabei erfolgt die Abbildung der Farb-Tripel 13 zunächst in eine Ebene 22. Das dort entstehende Bild wird mit Hilfe von den Sammellinsen 23 in der Ebene 21 in die Ebene 1 der Aufnahmelinsen 2 abgebildet. Der Bildschirm-Aperturwinkel bleibt dabei erhalten.

Bei dem Ausführungsbeispiel nach Fig. 5 sind wiederum nur eine Ebene von Aufnahmelinsen 25 und eine Ebene von Wiedergabelinsen 26 vorgesehen. Dabei sind jeweils eine Linse 25 und eine Linse 26 gleichachsig angeordnet, so daß die Zahl der Aufnahmelinsen bei diesem Ausführungsbeispiel der Zahl der Wiedergabelinsen entspricht.

Die Wiedergabelinsen 26 bilden die Farb-Tripel 13 reell in einer Ebene 27 zwischen der Ebene der Aufnahmelinsen 26 und der Ebene 3 der Photodetektoren 4 ab. Diese reelle verkleinerte Abbildung wird dann virtuell vergrößert mit Hilfe der Linsen 25 abgebildet. Die Photodetektoren 4 sind wiederum in der Brennebene der Aufnahmelinsen 25 angeordnet. Durch Wahl der Schichtdicken, der Brennweitenverteilung über den Schirm und die Lage der Photodetektoren innerhalb der Ebene 3 von Ort zu Ort kann der Bildwinkel und damit die Vergrößerung eingestellt werden.

## Patentansprüche

1. Bildaufnahmeeinrichtung mit mindestens einem Photodetektor je aufzunehmendem Bildelement, vor dem jeweils ein fokussierendes Element zur Abbildung jeweils eines Elementes des aufzunehmenden Bildes auf den Photodetektor angeordnet ist, wobei die Bildaufnahmeeinrichtung als dünne Platte ausgebildet ist und wobei auf der von dem aufzunehmenden Bild abgewandten Seite weitere fokussierende Elemente (6, 26) derart angeordnet sind, daß Licht, welches von einem Bildschirm (14) emittiert wird, auf dem die Bildaufnahmeeinrichtung aufgebracht ist, in einer Ebene fokussiert wird, die innerhalb der Bildaufnahmeeinrichtung oder unmittelbar vor der Bildaufnahmeeinrichtung liegt.

2. Bildaufnahmeeinrichtung nach Anspruch 1, dadurch gekennzeichnet, daß die Platte biegsam ist.

3. Bildaufnahmeeinrichtung nach einem der Ansprüche 1 oder 2, dadurch gekennzeichnet, daß das vom Bildschirm (14) emittierte Licht in der Ebene der fokussierenden Elemente (2) fokussiert wird.

4. Bildaufnahmeeinrichtung nach Anspruch 3, dadurch gekennzeichnet, daß die weiteren fokussierenden Elemente (6) jeweils eine größere Fläche als die fokussierenden Elemente (2) aufweisen.

5. Bildaufnahmeeinrichtung nach einem der vorhergehenden Ansprüche, dadurch gekennzeichnet, daß die weiteren fokussierenden Elemente (6) von jeweils einer Sammellinse gebildet werden.

6. Bildaufnahmeeinrichtung nach einem der Ansprüche 1 bis 4, dadurch gekennzeichnet, daß die weiteren fokussierenden Elemente jeweils von zwei voneinander im Abstand angeordneten Sammellinsen (6, 23) gebildet werden.

7. Bildaufnahmeeinrichtung nach einem der Ansprüche 1 oder 2, dadurch gekennzeichnet, daß jeweils ein weiteres fokussierendes Element (26) gleichachsig je einem Photodetektor (4) und einem fokussierenden Element (25) zugeordnet sind.

8. Bildaufnahmeeinrichtung nach Anspruch 7, dadurch gekennzeichnet, daß die Fokussierung des vom Bildschirm (14) emittierten Lichtes in einer Ebene (27) erfolgt, die zwischen dem Photodetektor (14) und der Ebene der fokussierenden Elemente (25) liegt.

9. Bildaufnahmeeinrichtung nach einem der vorhergehenden Ansprüche, dadurch gekennzeichnet, daß an der vom aufzunehmenden Bild abgewandten Seite der Photodetektoren eine lichtundurchlässige Schicht derart angeordnet ist, daß das vom Bildschirm emittierte Licht die Photodetektoren nicht beeinträchtigt.

10. Bildaufnahmeeinrichtung nach einem der vorhergehenden Ansprüche, dadurch gekennzeichnet, daß vor den Photodetektoren Farbfilter angeordnet sind, welche eine Separation verschiedenfarbigen Lichts ermöglichen.

11. Bildaufnahmeeinrichtung nach einem der vorhergehenden Ansprüche, dadurch gekennzeichnet, daß Licht, welches vom Bildschirm emittiert wird, an einem sich der Bildaufnahmeeinrichtung nähernden Gegenstand zu mindestens einem der Photodetektoren reflektiert wird und daß Informationen gewonnen werden, welche der Photodetektoren reflektiertes Licht empfangen.

## Claims

1. Image pick-up device with at least one photodetector for each image element to be picked up, arranged ahead of which there is in each case a focusing element for projecting onto the photodetector one element in each case of the image to be picked up, the image pick-up device being designed as a thin plate and further focusing elements (6, 26) being arranged on the side facing away from the image to be picked up in such a way that light which is emitted by a screen (14) on which the image pick-up device is mounted is focused in a plane which lies within the image pick-up device or directly ahead of the image pick-up device.

2. Image pick-up device according to Claim 1, characterized in that the plate is flexible.

3. Image pick-up device according to either of Claims 1 and 2, characterized in that the light emitted by the screen (14) is focused in the plane of the focusing elements (2).

4. Image pick-up device according to Claim 3, characterized in that the further focusing elements (6) in each case have a greater surface area than the focusing elements (2).

5. Image pick-up device according to one of the preceding claims, characterized in that the further focusing elements (6) are formed in each case by a converging lens.

6. Image pick-up device according to one of Claims 1 to 4, characterized in that the further focusing elements are formed in each case by two converging lenses (6, 23) arranged at a distance from each other.

7. Image pick-up device according to either of Claims 1 and 2, characterized in that a further focusing element (26) is in each case assigned coaxially to a respective photodetector (4) and a respective focusing element (25).

8. Image pick-up device according to Claim 7, characterized in that the focusing of the light emitted by the screen (14) takes place in a plane (27) which lies between the photodetector (14) and the plane of the focusing elements (25).

9. Image pick-up device according to one of the preceding claims, characterized in that an opaque layer is arranged on the side of the photodetectors facing away from the image to be picked up in such a way that the light emitted by the screen does not adversely affect the photodetectors.

10. Image pick-up device according to one of the preceding claims, characterized in that colour filters which permit a separation of differently coloured light are arranged ahead of the photodetectors.

11. Image pick-up device according to one of the preceding claims, characterized in that light which is emitted by the screen is reflected at an object approaching the image pick-up device to at least one of the photodetectors and in that information as to which of the photodetectors is receiving reflected light is obtained.

## Revendications

1. Dispositif d'enregistrement d'images comprenant au moins un détecteur photoélectrique par élément d'image à enregistrer, devant lequel est à chaque fois disposé un élément de focalisation pour représenter à chaque fois un élément de l'image à enregistrer sur le détecteur photoélectrique, le dispositif d'enregistrement d'images étant réalisé sous la forme d'une plaque mince et deux éléments de focalisation (6, 26) supplémentaires étant disposés sur le côté opposé à celui de l'image à enregistrer de manière à ce que la lumière qui est émise par un écran (14) sur lequel est appliqué le dispositif d'enregistrement d'images soit focalisée dans un plan qui se trouve à l'intérieur du dispositif d'enregistrement d'images ou immédiatement devant le dispositif d'enregistrement d'images.

2. Dispositif d'enregistrement d'images selon la revendication 1, caractérisé en ce que la plaque est pliable.

3. Dispositif d'enregistrement d'images selon l'une des revendications 1 ou 2, caractérisé en ce que la lumière émise par l'écran (14) est focalisée dans le plan des éléments de focalisation (2).

4. Dispositif d'enregistrement d'images selon la revendication 3, caractérisé en ce que les éléments de focalisation supplémentaires (6) présentent chacun une surface plus grande que les éléments de focalisation (2).

5. Dispositif d'enregistrement d'images selon l'une des revendications précédentes, caractérisé en ce que les éléments de focalisation supplémentaires (6) sont chacun formés par une lentille convergente.

6. Dispositif d'enregistrement d'images selon l'une des revendications 1 à 4, caractérisé en ce que les éléments de focalisation supplémentaires sont chacun formés par deux lentilles convexes (6, 23) disposées à une certaine distance l'une de l'autre.

7. Dispositif d'enregistrement d'images selon l'une des revendications 1 ou 2, caractérisé en ce qu'un détecteur photoélectrique (4) et un élément focalisant (25) sont associés à chacun des éléments de focalisation supplémentaires (26) et qu'ils se trouvent dans le même axe.

8. Dispositif d'enregistrement d'images selon la revendication 7, caractérisé en ce que la focalisation de la lumière émise par l'écran (14) est réalisée dans un plan (27) qui se trouve entre le détecteur photoélectrique (14) et le plan des éléments de focalisation (25) .

9. Dispositif d'enregistrement d'images selon l'une des revendications précédentes, caractérisé en ce que sur le côté des détecteurs photoélectriques qui est opposé à l'image à enregistrer est disposée une couche opaque de telle manière que la lumière émise par l'écran n'affecte pas les détecteurs photoélectriques.

10. Dispositif d'enregistrement d'images selon l'une des revendications précédentes, caractérisé en ce que des filtres de couleur sont disposés devant les détecteurs photoélectriques, lesquels permettent une séparation de la lumière en différentes couleurs.

11. Dispositif d'enregistrement d'images selon l'une des revendications précédentes, caractérisé en ce que le la lumière qui est émise par l'écran est réfléchie sur un objet qui se rapproche du dispositif d'enregistrement d'images vers au moins l'un des détecteurs photoélectriques et que des informations sont obtenues indiquant lesquels des détecteurs photoélectriques reçoivent la lumière réfléchie.
